# EUROPÄISCHE PATENTSCHRIFT

(11) **EP 2 291 901 B1**
(45) Veröffentlichungstag und Bekanntmachung des Hinweises auf die Patenterteilung: **05.06.2019**
(21) Anmeldenummer: 09769311.3
(22) Anmeldetag: 25.06.2009
(51) Int. Cl.: H02K 5/20, H02K 9/06, H02K 11/04

(54) **ELEKTRISCHE MASCHINE**
ELECTRIC MACHINE
MACHINE ÉLECTRIQUE

(30) Priorität: 25.06.2008 DE 102008002638
(43) Veröffentlichungstag der Anmeldung: 09.03.2011
(73) Patentinhaber: SEG Automotive Germany GmbH, 70499 Stuttgart (DE)
(72) Erfinder: AMARAL, Daniel, CEP-13024-020 Cambui Campinas-SP (BR)
(74) Vertreter: Steinbauer, Florian
(86) Internationale Anmeldenummer: PCT/EP2009/057951
(87) Internationale Veröffentlichungsnummer: WO 2009/156463

(56) Entgegenhaltungen:
- EP-A- 0 125 834
- WO-A-02/093717
- DE-A1- 10 111 295
- DE-A1- 19 705 228

## Beschreibung

### Stand der Technik

Aus der Offenlegungsschrift EP 0 125 834 A2 ist eine elektrische Maschine bekannt, die eine Gleichrichtereinrichtung mit Dioden bekannt, die in einem Plus- und einem Minuskühlkörper angeordnet sind. Der Pluskühlkörper und der Minuskühlkörper sind unmittelbar aufeinander angeordnet.

Aus der Offenbarung der WO 02/093717 A1 ist eine elektrische Maschine ausgeführt als Wechselstromgenerator bekannt. Es ist dabei eine Gleichrichteranordnung offenbart, die einen Minuskühlkörper und einen Pluskühlkörper für Minusdioden und Plusdioden aufweist. Zwischen diesen beiden Kühlkörpern ist eine Anschlussplatte angeordnet, die zur Verschaltung der Plus- und Minusdioden mit einer Ständerwicklung dient, so dass eine so genannte Brückenschaltung zwecks Gleichrichtung eines Wechselstroms offenbart ist. Die Anschlussplatte ist dabei derartig gestaltet, dass Öffnungen zum Durchströmen mit Kühlluft vorgesehen sind.

### Offenbarung der Erfindung

Die Erfindung berifft einen elektrischen Generator mit den Merkmalen des unabhängigen Patentanspruchs 1.

### Figurenbeschreibung

In den Figuren 1 und 2 ist ein Querschnitt durch eine prinzipiell dargestellte elektrische Maschine gezeigt.

In Figur 3 ist in Draufsicht ein Pluskühlkörper, der um eine Plusdiode herum Löcher aufweist, gezeigt.

In Figur 4a ist ein Regleranschluss gezeigt (nicht Gegenstand der Erfindung).

In den Figuren 4b und 4c ist ein Schraubkontakthalter gezeigt (nicht Gegenstand der Erfindung).

In Figur 5 ist ein Querschnitt eine Befestigungsvorrichtung zwischen der Anschlussplatte und der Schutzkappe dargestellt (nicht Gegenstand der Erfindung).

In Figur 6 ist dargestellt, wie die Anschlussplatte und eine Platte mit zumindest einer Führungshülse ineinander eingreifen (nicht Gegenstand der Erfindung).

In Figur 1 ist ein Querschnitt durch eine prinzipiell dargestellte elektrische Maschine 10, hier in der Ausführung als Generator bzw. Drehstromgenerator für Kraftfahrzeuge, gezeigt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 mit mehreren Phasenwicklungen eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurch treten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

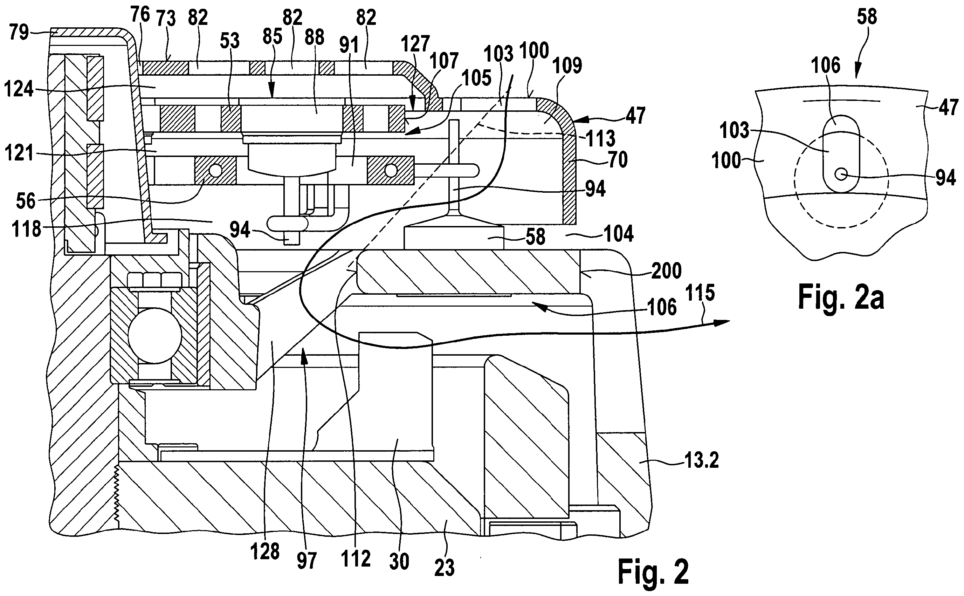

Figur 2: Die Schutzkappe 47 weist einen zylindrischen Außenrand 70 auf, der zum Lagerschild 13.2 gerichtet ist. Die Schutzkappe 47 hat des Weiteren ein zentrales Plateau 73, in dessen Mitte sich eine Öffnung 76 befindet. Durch diese Öffnung ragt ein Schleifringschutz 79. Die Schutzkappe 47 hat in ihrem Plateau 73 mehrere ringförmig angeordnete Belüftungsöffnungen 82. Direkt gegenüber von diesen Belüftungsöffnungen 82 befindet sich im Inneren der elektrischen Maschine 10 der Pluskühlkörper 53. In diesem Kühlkörper 53 sind eine Mehrzahl von Plusdioden 85, die mit Ihrem Diodensockel 88 in zylindrische Öffnungen des Kühlkörpers 53 eingesetzt sind. Die Plusdiode 85 ragt mit ihrem der Anschlussplatte 56 zugewandten Ende in eine Öffnung 91 der Anschlussplatte 56 hinein. Ein Diodenanschlussdraht 94 ist auf einen Ringbereich des Lagerschilds 13.2 gerichtet, in dem mehrere Lufteinlassöffnungen 97 zur Belüftung der Maschine 10 angeordnet sind.

Die Schutzkappe 47 hat zwischen dem zylindrischen Außenrand 70 und dem Plateau 73 einen abgesenkten Ringbereich 100, der sich zumindest über einen Teil des Umfangs, vor allem über den Winkelbereich ausgehend von einer Drehachse des Rotors 20, über den die Plusdioden 85 angeordnet sind, erstreckt. In diesem Ringbereich 100 sind über dessen Länge mehrere Öffnungen 103 angeordnet, die den Eintritt von Kühlluft ermöglichen. Im Minuskühlkörper 106, der hier Teil des Lagerschilds 13.2 ist, sind ebenfalls in Figur 2 nicht dargestellte Öffnungen vorhanden, in denen die Minusdioden 58 eingesteckt sind.

Zwischen dem im Wesentlichen zylindrischen Außenrand 70 und dem Minuskühlkörper 106 ist ein axialer Abstand 104.

Es ist somit eine elektrische Maschine, vorzugsweise elektrischer Generator, mit einem Stator und einem Rotor gezeigt, wobei der Stator eine Ständerwicklung (mehrere Phasenwicklungen) aufweist, die mit einem Gleichrichter 105 elektrisch verbunden ist, wobei der Gleichrichter mittels einer Brückenschaltung verbundene Plus- und Minusdioden aufweist, wobei die Plusdioden mit einem Pluskühlkörper und die Minusdioden mit einem Minuskühlkörper verbunden sind (eingesteckt oder alternativ auf einem dort dann nicht gelochten Kühlkörper verlötet) und der Gleichrichter von einer Kühlluftöffnungen aufweisenden Schutzkappe 47 bedeckt ist, wobei die Schutzkappe 47 zumindest eine Öffnung aufweist, die axial über der Minusdiode und dem Minuskühlkörper angeordnet ist. Der Pluskühlkörper 53 ist damit axial über einer Lufteinlassöffnung 97 im Lagerschild 13.2 angeordnet ist.

Es ist vorgesehen, dass die Öffnung 103 zumindest so erstreckt ist, dass in axialer Richtung zumindest ein Flächenabschnitt einer Diodenoberfläche mit einer Länge über einen halben Durchmesser einer Minusdiode 58 unterbrechungsfrei freigegeben bzw. von der Öffnung 103 überdeckt ist, s. a. Figur 2a.

Zwischen der Schutzkappe 47 und dem Minuskühlkörper ist ein Hohlraum 109 angeordnet, wobei die axial über der Minusdiode 58 angeordnete Öffnung 103, die Minusdiode 58 bzw. deren Diodenanschlussdraht 94 selbst und ein radialer Innenrand 112 des Minuskühlkörpers 106 in einer Ebene 113 angeordnet sind. Dies führt zu einem Kühlluftstrom 115 ohne Umwege mit wenigen Verlusten. Eine Öffnung 82 in der Schutzkappe 47 axial gegenüber der Plusdiode 88 weist einen größeren axialen Abstand zum Minuskühlkörper 106 auf, als die Öffnung 103 in der Schutzkappe axial direkt gegenüber der Minusdiode 58.

Zwischen der Schutzkappe 47 und dem Minuskühlkörper 106 ist nach einem Zwischenraum 118 zunächst eine Anschlussplatte 56 zur Verwirklichung der Gleichrichterbrückenschaltung angeordnet. Nach einem weiteren Zwischenraum 121 folgt der Pluskühlkörper 53. Zwischen der abschließenden Schutzkappe 47 und dem Pluskühlkörper 53 ist ein dritter Zwischenraum 124.

Der abgesenkte Ringbereich 100 ist in etwa auf Höhe des Pluskühlkörpers 53. Aus Toleranz- und damit Fertigungsgründen ist zwischen dem Pluskühlkörper 53 und dem Ringbereich 100 ein schmaler Zwischenraum 127. Dies führt zu einer Drosselung der angesaugten Kühlluft derart, dass eine allzu ungünstige Aufspaltung des Kühlluftstroms vermieden wird. Diese Anordnung führt dazu, dass der Kühlluftstrom, der durch die Öffnungen 103 angesaugt wird, im wesentlichen zwischen der Anschlussplatte 56 und dem Minuskühlkörper 106 strömt und damit die Minusdioden 58 effektiv kühlt, weil eine Vorerwärmung durch Kühlung von Plusdioden 88 nicht erfolgt.

Ein Abstand zwischen der Anschlussplatte 56 und dem Pluskühlkörper 53 ist kleiner als der Abstand zwischen dem Minuskühlkörper 106 und der Anschlussplatte 56. Des Weiteren ist der Außendurchmesser der Anschlussplatte 56 in etwa so oder gleich groß wie eine bogenförmige Außenkante 107 zwischen Befestigungsösen 108 für Schrauben 110 des Pluskühlkörpers 53.

Die Lufteinlassöffnungen 97 sind durch Stege 128 getrennt, wobei diese schräg zur Achse der elektrischen Maschine angeordnet sind.

Der Minuskühlkörper 106 und der Pluskühlkörper 53 überlappen sich im Bereich des Außenumfangs des Pluskühlkörpers 53, wobei dabei ein radial außen liegender Rand der Lufteinlassöffnung 97 des Minuskühlkörpers 106 dem Außenumfangs des Pluskühlkörpers 53 axial gegenüber liegt. Der Minuskühlkörper 106 weist des Weiteren einen radial äußeren Rand 200 mit einer im Wesentlichen achsparallelen Fläche auf, die an eine Auslassöffnung 203 im Lagerschild 13.2 angrenzt.

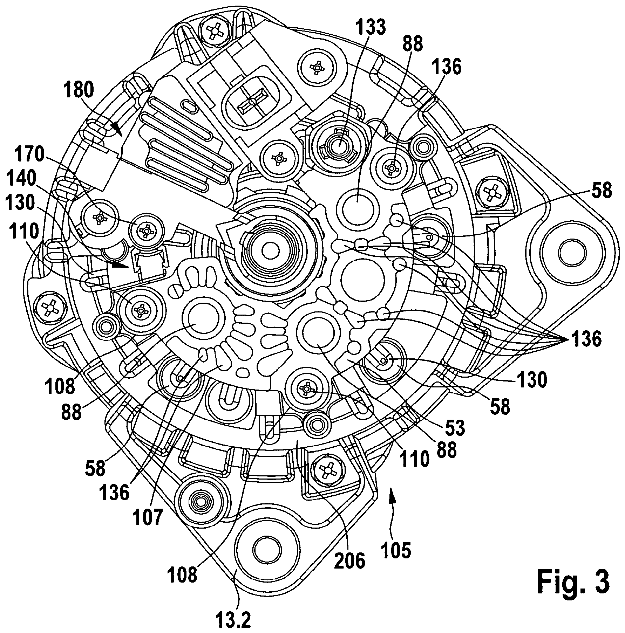

Es ist vorgesehen, dass eine der Minusdiode 58 nächstgelegene Plusdiode 88 in Umfangsrichtung versetzt angeordnet ist, s. a. Figur 3. Diese Figur zeigt u. a. den Pluskühlkörper, der um eine Plusdiode 88 herum Löcher aufweist.

Figur 3 zeigt eine Draufsicht auf den Pluskühlkörper 53. Unter dem Pluskühlkörper 53 ist die Anschlussplatte 56 angeordnet, von der nur die unter dem Pluskühlkörper 53 hervorragenden Anschlussschlaufen 130 zu erkennen sind.

Zu erkennen ist auch der sogenannten B+-Bolzen 133, an dem die elektrische Leistung an das Bordnetz abgegeben wird. Die dem B+-Bolzen 133 nächstgelegene Plusdiode 88 auf in etwa 2-Uhr-Position ist nur von drei Kühlungsöffnungen 136 umgeben. Zwei dieser Kühlungsöffnungen 136 dienen zu dem auch der Kühlung der Plusdiode 88, welche sich auf 5-Uhr-Position befindet. Diese Plusdiode 88 ist insgesamt von sechs Kühlluftöffnungen 136 umgeben, von denen vier ausschließlich der Kühlung dieser Plusdiode 88 dienen. Die dritte Plusdiode 88 auf ca. 8-Uhr-Position ist von acht Kühlluftöffnungen 136 umgeben, die unmittelbar der Kühlung dieser Diode dienen.

Der Durchtrittsquerschnitt der Kühlluftöffnungen 136 ist unter Berücksichtigung der rechnerischen gleichmäßigen Aufteilung des Durchtrittsquerschnitts der Kühlluftöffnungen 136 zwischen der sich auf in etwa 2-Uhr-Position befindenden Plusdiode 88 und der Plusdiode 88, welche sich auf 5-Uhr-Position befindet ermittelt. So ermittelt, ist die sich auf der 2-Uhr-Position befindende Plusdiode 88 nur von zwei Kühlluftöffnungen gekühlt. Zwei Kühlungsöffnungen 136 dienen zu dem auch der Kühlung der Plusdiode 88, welche sich auf 5-Uhr-Position befindet, so dass diese im Mittel durch vier Kühlluftöffnungen gekühlt ist.

Es ist demnach eine elektrische Maschine, insbesondere elektrischer Generator, mit einem Stator und einem Rotor, offenbart wobei der Stator eine Ständerwicklung (mehrere Phasenwicklungen) aufweist, die mit einem Gleichrichter elektrisch verbunden ist, wobei der Gleichrichter mittels einer Brückenschaltung verbundene Plus- und Minusdioden aufweist, wobei die Plusdioden mit einem Pluskühlkörper und die Minusdioden mit einem Minuskühlkörper verbunden sind (eingesteckt oder verlötet), wobei Kühlluftöffnungen 136 dazu vorgesehen sind, die Plusdioden 88 zu kühlen, wobei die Plusdiode 88, welche einem B+-Bolzen am nächsten gelegen ist, gemessen am anrechenbaren Kühlungsquerschnitt der Kühlluftöffnungen 136, am wenigsten durch Kühlluftöffnungen 136 und dort hindurch tretende Kühlluft gekühlt wird.

In diesem Zusammenhang ist für eine elektrische Maschine nach dem vorherigen Absatz vorgesehen, dass eine Plusdiode 88, die dem B+-Bolzen am zweitnächsten angeordnet ist, gemessen am anrechenbaren Kühlungsquerschnitt der Kühlluftöffnungen 136, besser als die andere Plusdiode 88 durch Kühlluftöffnungen 136 und dort hindurch tretende Kühlluft gekühlt wird.

Für den Fall, dass eine dritte Plusdiode 88 vorhanden ist, die vom B+-Bolzen am weitesten entfernt angeordnet ist, ist für diese vorgesehen, gemessen am anrechenbaren Kühlungsquerschnitt der Kühlluftöffnungen 136, dass diese verglichen mit den anderen Plusdioden 88 am meisten Kühlluftöffnungen 136 aufweist. Der Grund hierfür liegt darin, dass die Anschlussplatte 56 im Bereich der dritten Plusdiode 88 verglichen mit den anderen Plusdioden 88 die Kühlluftöffnungen verhältnismäßig großflächig, jedenfalls mehr als bei den anderen beiden Plusdioden 88, abdeckt.

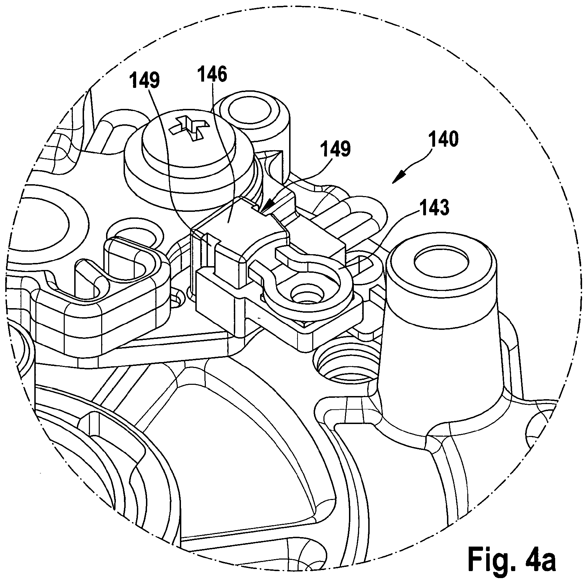

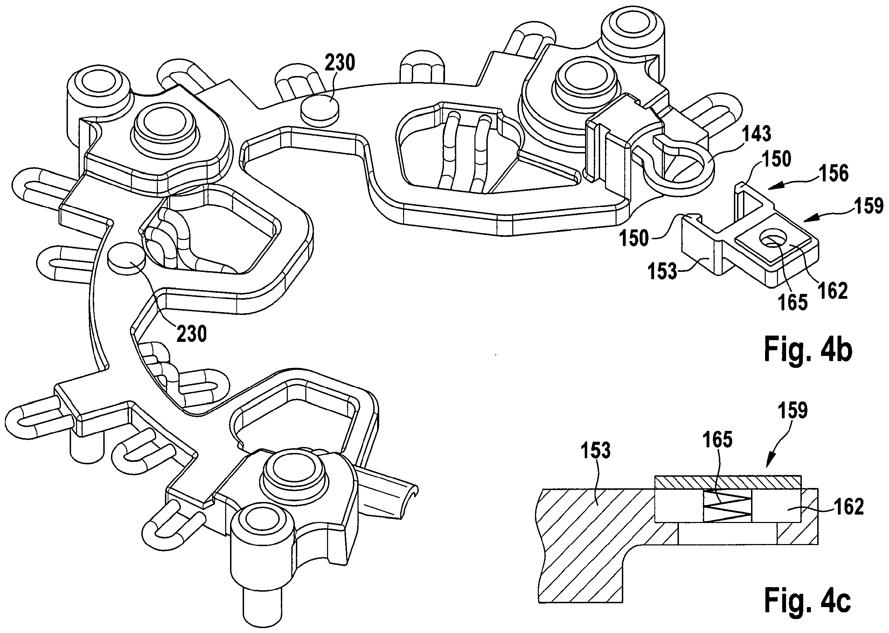

In Figur 4a ist ein nicht beanspruchter Regleranschluss 140 gezeigt. Dieser Regleranschluss 140 besteht aus einer aus der Anschlussplatte 56 heraustretenden Schlaufe 143, die einstückig mit in der Anschlussplatte 56 eingebetteten Leitern verbunden ist. Die Schlaufe 143 tritt aus einem in etwa prismatischen Anschlussstutzen 146 an höherer Stelle aus, sie liegt damit in einer anderen Ebene als die Verbindungsleiter, die die Brückenschaltung ermöglichen. Der Anschlussstutzen 146 erstreckt sich prismatisch in Richtung der Achse des Rotors 20 und weist in etwa an der nach radial innen gerichteten und nach radial außen gerichteten Seite je eine Führungs- bzw. Verbindungsnut 149 auf, s. a. Fig. 4b. In diese zueinander parallelen Führungs- bzw. Verbindungsnuten 149 greift je ein Schnapphaken 150 eines Schraubkontakthalters 153 ein. Dieser Schraubkontakthalter 153 weist neben einem Greifbereich 156 mit den Schnapphaken 150 einen Einlagenbereich 159 auf, der eine hier quadratische Aufnahme für ein lose eingelegtes Gewindeplättchen 162 ist. Das Gewindeplättchen 162 weist in seinem Zentrum ein Innengewinde 165 auf, das zur Aufnahme eines Gewindebolzens einer Befestigungs- und Kontaktschraube 170 (Fig. 3) dient. Im montierten Zustand (Fig. 4a) ist das Gewindeplättchen 162 mit seinem Gewinde 165 zentrisch unterhalb der Schlaufe 143 angeordnet, so dass mittels der in das Gewinde 165 eingreifenden Befestigungs- und Kontaktschraube 170 ein elektrischer Kontakt zwischen einem Leiter des Reglers 180 und der Schlaufe 143 hergestellt wird. Das Gewindeplättchen 162 wird dabei von unten an die Schlaufe 143 gedrückt, so dass die Schlaufe 143 gegen den Leiter des Reglers 180 gedrückt wird.

Es ist demnach eine nicht beanspruchte elektrische Maschine, insbesondere elektrischer Generator, mit einem Stator und einem Rotor, offenbart wobei der Stator eine Ständerwicklung (mehrere Phasenwicklungen) aufweist, die mit einem Gleichrichter elektrisch verbunden ist, wobei der Gleichrichter mittels einer Brückenschaltung verbundene Plus- und Minusdioden aufweist, wobei eine Anschlussplatte 56 die Leiter in sich trägt, die der Darstellung der Brückenschaltung dienen und diese Anschlussplatte 56 einen Regleranschluss 140 aufweist, der eine aus einem Anschlussstutzen 146 herausragende Schlaufe 143 trägt, wobei an zwei Seiten des Anschlussstutzens 146 je eine Führungs- bzw. Verbindungsnut 149 angeordnet ist, in die je ein Schnapphaken 150 eines Schraubkontakthalters 153 eingreift, der einen Einlagenbereich 159 aufweist, der eine Aufnahme für ein Gewindeplättchen 162 hat, wobei ein Innengewinde 165 zur Aufnahme eines Gewindebolzens einer Befestigungs- und Kontaktschraube 170 (Fig. 3) dient und im montierten Zustand (Fig. 4a) das Gewindeplättchen 162 mit seinem Gewinde 165 zentrisch unterhalb der Schlaufe 143 angeordnet ist, so dass mittels der in das Gewinde 165 eingreifenden Befestigungs- und Kontaktschraube 170 ein elektrischer Kontakt zwischen einem Leiter des Reglers 180 und der Schlaufe 143 hergestellt ist.

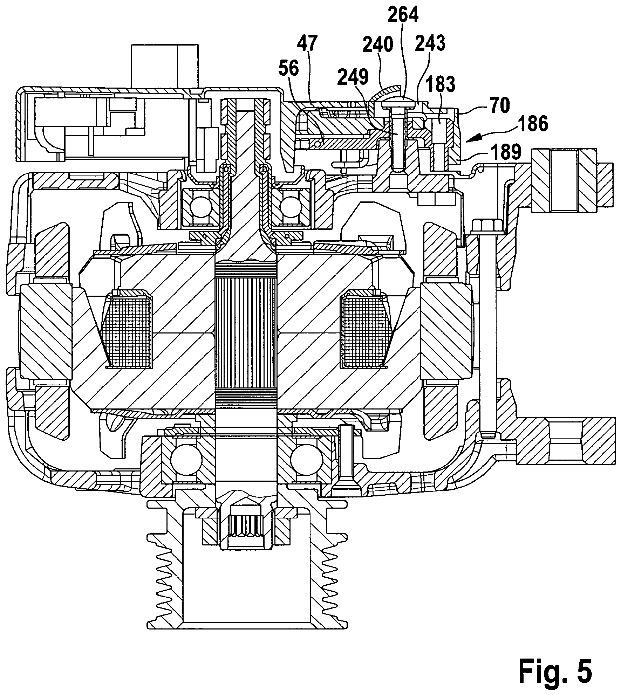

In Figur 5 ist ein Querschnitt durch die nicht beanspruchte Befestigungsvorrichtung zwischen der Anschlussplatte 56 und der Schutzkappe 47 dargestellt. Von der Anschlussplatte 56 aus erstreckt sich nach radial außen ein Halterohr 183, auf dessen vom Lagerschild 13.2 abgewandten Seite die Schutzkappe 47 mit ihrer Innenseite aufliegt. Das Halterohr 183 weist auf seiner Außenseite eine Stufe 186 auf, die von einem Schnapphaken 189 der Schutzkappe 47 hintergriffen ist.

Es ist demnach eine nicht beanspruchte elektrische Maschine, insbesondere elektrischer Generator, mit einem Stator und einem Rotor, offenbart wobei der Stator eine Ständerwicklung (mehrere Phasenwicklungen) aufweist, die mit einem Gleichrichter elektrisch verbunden ist, wobei der Gleichrichter mittels einer Brückenschaltung verbundene Plus- und Minusdioden aufweist, wobei eine Anschlussplatte 56 die Leiter in sich trägt, die der Darstellung der Brückenschaltung dienen, wobei eine Befestigungsvorrichtung zwischen der Anschlussplatte 56 und der Schutzkappe 47 vorhanden ist und sich von der Anschlussplatte 56 aus in etwa nach radial außen ein Halterohr 183 erstreckt, vorzugsweise auf dessen vom Lagerschild 13.2 abgewandten Seite die Schutzkappe 47 mit ihrer Innenseite aufliegt, wobei das Halterohr 183 auf seiner Außenseite eine Stufe 186 aufweist, die von einem Schnapphaken 189 der Schutzkappe 47 hintergriffen ist.

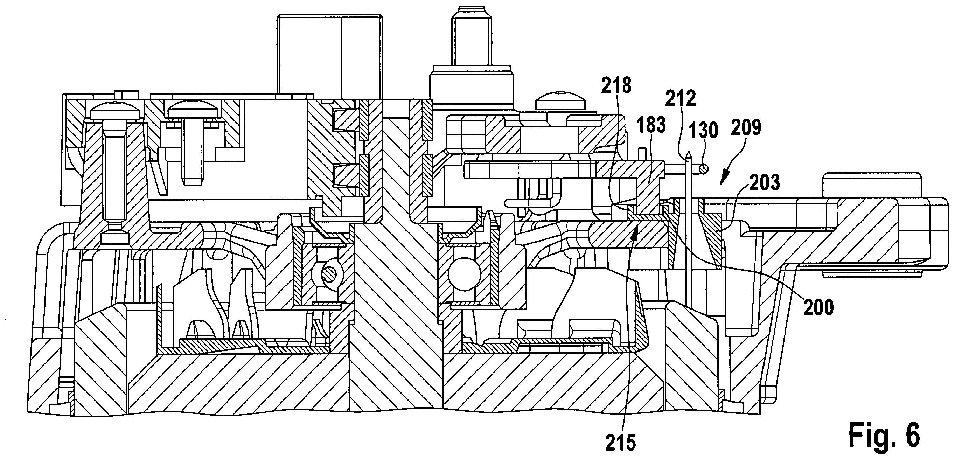

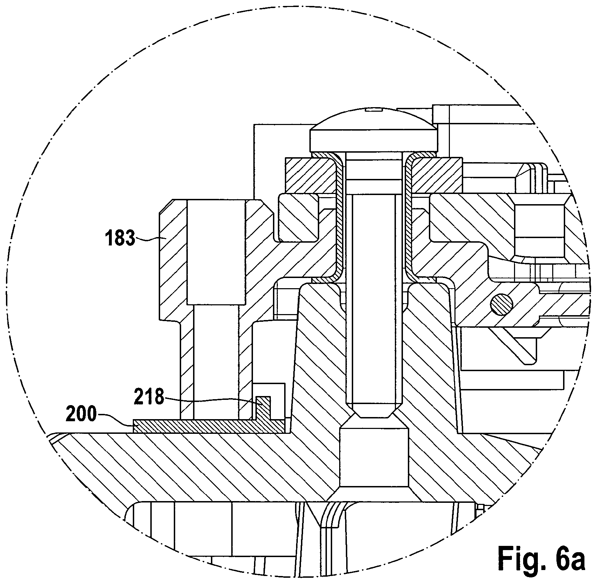

In Figur 6 ist dargestellt, wie die Anschlussplatte 56 und eine nicht beanspruchte Platte 200 mit zumindest einer Führungshülse 203 ineinander eingreifen. Die Platte 200 liegt mit einem Flächenbereich 206, s. a. Figur 6, auf einer ebenen Fläche des Lagerschilds 13.2 auf. Die zumindest eine an der Platte 200 einstückig angeformte Führungshülse 206 greift in eine Öffnung des Lagerschilds 13.2 ein und nimmt einen oder mehrere Anschlussdrähte 212 einer Ständerwicklung 18 auf. Die Anschlussdrähte kontaktieren Kontaktelemente in Gestalt von Anschlussschlaufen 130. Von der Platte 200 geht nach radial innen ein Flächenelement 215 aus, von dem ein Stegabschnitt 218 nach axial außen absteht. Dieser Stegabschnitt 218 ist wie in Figur 6 dargestellt bspw. ringförmig oder linienförmig und hintergreift das Halterohr 183. Radial außerhalb dieses Stegabschnitts 218 stützt sich das Halterohr 183 ab und verhindert so im noch nicht fixierten (Montage) Zustand die Platte 200, die auf diese Weise ohne Weiteres nicht lose den Verbund aus Lagerschild 13.2 und Anschlussplatte 56 verlassen kann.

Es ist demnach eine nicht beanspruchte elektrische Maschine, insbesondere elektrischer Generator, mit einem Stator und einem Rotor, offenbart wobei der Stator eine Ständerwicklung (mehrere Phasenwicklungen) aufweist, die mit einem Gleichrichter elektrisch verbunden ist, wobei der Gleichrichter mittels einer Brückenschaltung verbundene Plus- und Minusdioden aufweist, wobei eine Anschlussplatte 56 die Leiter in sich trägt, die der Darstellung der Brückenschaltung dienen, wobei die Anschlussplatte 56 und eine Platte 200 mit zumindest einer Führungshülse 203 ineinander eingreifen, wobei die Platte 200 mit einem Flächenbereich 206, auf einer ebenen Fläche des Lagerschilds 13.2 aufliegt und die zumindest eine an der Platte 200 einstückig angeformte Führungshülse 206 in eine Öffnung des Lagerschilds 13.2 eingreift und einen oder mehrere Anschlussdrähte 212 einer Ständerwicklung 18 aufnimmt, wobei von der Platte 200 nach radial innen ein Flächenelement 215 ausgeht, von dem ein Stegabschnitt 218 nach axial außen absteht, und sich radial außerhalb dieses Stegabschnitts 218 das Halterohr 183 auf der Platte 200 abstützt.

Figur 4b zeigt auf der Anschlussplatte 56 ein Distanzelement 230, das sich an einem hier nicht gezeigten gleich oder ähnlich ausgeführten Distanzelement am Pluskühlkörper 53 anlagert.

Figur 5 zeigt skizzenhaft eine nicht beanspruchte Schraubenabdeckung 240, die einstückig mit der Schutzkappe 47 aus Kunststoff ausgeführt ist. Diese Schraubenabdeckung 240 bedeckt den Schraubenkopf 246 nur zur Hälfte, so dass die hier beispielhaft kreisrunde Öffnung 243 nur halbkreisförmig durch die Schraubenabdeckung 240 geschlossen ist. Dies hat den Vorteil, dass die Schraube 249 nicht gelöst werden kann, wenn die elektrische Maschine 10 an Ort und Stelle im Fahrzeug montiert ist. Angeschlossene Kabel am B+-Bolzen 133 verhindern dies zunächst. Der andere Vorteil besteht darin, dass an dieser Stelle Material eingespart werden kann.

Es ist demnach eine nicht beanspruchte elektrische Maschine, insbesondere elektrischer Generator, mit einem Stator und einem Rotor, offenbart wobei der Stator eine Ständerwicklung (mehrere Phasenwicklungen) aufweist, die mit einem Gleichrichter elektrisch verbunden ist, wobei eine Schutzkappe 47 aus Kunststoff den Gleichrichter abdeckt, wobei ein Pluskühlkörper 53 durch zumindest eine Schraube 249 am Lagerschild 13.2 befestigt ist, wobei die Schraube 249 durch eine Schraubenabdeckung 240, die einstückig mit der Schutzkappe 47 ausgeführt ist abgedeckt ist und wobei diese Schraubenabdeckung 240 den Schraubenkopf 246 nur teilweise, vorzugsweise zur Hälfte, bedeckt, so dass eine Öffnung 243 um die Schraube 249 herum nur teilweise, vorzugsweise halbkreisförmig durch die Schraubenabdeckung 240 geschlossen ist.

## Patentansprüche

1. Elektrischer Generator, mit einem Stator (16) und einem Rotor, wobei der Stator (16) eine Ständerwicklung (18) aufweist, die mit einem Gleichrichter (105) elektrisch verbunden ist,
wobei der Gleichrichter (105) mittels einer Brückenschaltung verbundene Plus- und Minusdioden (88, 58) aufweist,
wobei die Plusdioden (88) mit einem Pluskühlkörper (53) und die Minusdioden (58) mit einem Minuskühlkörper (106) verbunden sind,
wobei der Gleichrichter von einer Kühlluftöffnungen aufweisenden Schutzkappe (47) bedeckt ist,
wobei die Schutzkappe (47) zumindest eine Öffnung (103) aufweist, die axial über der Minusdiode (58) und dem Minuskühlkörper (106) angeordnet ist,
wobei zwischen der Schutzkappe (47) und dem Minuskühlkörper (106) nach einem Zwischenraum (118) zunächst eine Anschlussplatte (56) zur Verwirklichung der Gleichrichterbrückenschaltung angeordnet ist,
wobei nach einem weiteren Zwischenraum (121) der Pluskühlkörper (53) folgt und zwischen der abschließenden Schutzkappe (47) und dem Pluskühlkörper (53) ein dritter Zwischenraum (124) ist,
**dadurch gekennzeichnet, dass**
die Schutzkappe (47) einen abgesenkten Ringbereich (100) aufweist, der in etwa auf axialer Höhe des Pluskühlkörpers (53) ist, wobei aus Toleranz- und Fertigungsgründen zwischen dem Pluskühlkörper (53) und dem Ringbereich (100) ein schmaler Zwischenraum (127) ist, so dass ein Kühlluftstrom (115), der durch die Öffnungen (103) angesaugt wird, im Wesentlichen zwischen der Anschlussplatte (56) und dem Minuskühlkörper (106) strömt und damit die Minusdioden (58) effektiv kühlt, weil eine Vorerwärmung durch Kühlung von Plusdioden (88) nicht erfolgt.

2. Elektrischer Generator nach Anspruch 1, **dadurch gekennzeichnet, dass** die Öffnung (103) in der Schutzkappe (47) axial über der Minusdiode (58) zumindest so erstreckt ist, dass in axialer Richtung zumindest ein Flächenabschnitt einer Diodenoberfläche mit einer Länge über einen halben Durchmesser einer Minusdiode (58) unterbrechungsfrei freigegeben bzw. von der Öffnung (103) überdeckt ist.

3. Elektrischer Generator nach Anspruch 1 oder 2, **dadurch gekennzeichnet, dass** zwischen der Schutzkappe (47) und dem Minuskühlkörper (106) ein Hohlraum (109) angeordnet ist, wobei die Öffnung (103) in der Schutzkappe (47) axial über der Minusdiode (58), ein Diodenanschlussdraht (94) der Minusdiode (94) und ein radialer Innenrand (112) des Minuskühlkörpers (106) in einer Ebene (113) angeordnet sind.

4. Elektrischer Generator nach Anspruch 3, **dadurch gekennzeichnet, dass** eine der Minusdiode (58) nächstgelegene Plusdiode (88) in Umfangsrichtung versetzt angeordnet ist.

5. Elektrischer Generator nach einem der vorstehenden Ansprüche, **dadurch gekennzeichnet, dass** der Pluskühlkörper (53) axial über einer von mehreren Lufteinlassöffnungen (97) im Lagerschild (13.2) angeordnet ist.

6. Elektrischer Generator nach Anspruch 5, **dadurch gekennzeichnet, dass** die Lufteinlassöffnungen (97) durch Stege (128) getrennt sind, wobei diese schräg zur Achse der elektrischen Maschine und nach radial innen zu einer Klauenpolplatine (23) angeordnet sind.

7. Elektrischer Generator nach einem der vorstehenden Ansprüche, **dadurch gekennzeichnet, dass** der Pluskühlkörper (53) um eine Plusdiode (88) herum Kühlluftöffnungen (136) aufweist.

8. Elektrischer Generator nach einem der vorstehenden Ansprüche, **dadurch gekennzeichnet, dass** die Anschlussplatte (56) eine Öffnung (91) aufweist, durch die Kühlluft durchströmen kann, wobei die Öffnung (91) kleiner ist als der äußerste Abstand zweier diagonal gegenüberliegender unmittelbar um die Plusdiode herum angeordneter Kühlluftöffnungen (136).

9. Elektrischer Generator nach einem der vorstehenden Ansprüche, **dadurch gekennzeichnet, dass** ein Abstand zwischen der Anschlussplatte (56) und dem Pluskühlkörper (53) kleiner ist als der Abstand zwischen dem Minuskühlkörper (106) und der Anschlussplatte (56).

10. Elektrischer Generator nach einem der vorstehenden Ansprüche, **dadurch gekennzeichnet, dass** eine Öffnung (82) in der Schutzkappe (47) axial gegenüber der Plusdiode (88) einen größeren axialen Abstand zum Minuskühlkörper (106) aufweist als die Öffnung (103) in der Schutzkappe (47) axial über der Minusdiode (88).

11. Elektrischer Generator nach einem der vorstehenden Ansprüche, **dadurch gekennzeichnet, dass** sich der Minuskühlkörper (106) und der Pluskühlkörper (53) im Bereich des Außenumfangs des Pluskühlkörpers (53) überlappen, wobei dabei ein radial außen liegender Rand einer Lufteinlassöffnung (97) des Minuskühlkörpers (106) dem Pluskühlkörper (53) axial gegenüber liegt.

12. Elektrischer Generator nach einem der vorstehenden Ansprüche, **dadurch gekennzeichnet, dass** die Schutzkappe (47) einen äußeren im Wesentlichen zylindrischen Außenrand (70) aufweist, wobei zwischen dem Außenrand (70) und dem Minuskühlkörper (106) ein axialer Abstand (104) besteht.

13. Elektrischer Generator nach einem der vorstehenden Ansprüche, **dadurch gekennzeichnet, dass** der Minuskühlkörper (106) das Lagerschild (13.2) ist.

14. Elektrischer Generator nach Anspruch 13, **dadurch gekennzeichnet, dass** der Minuskühlkörper (106) einen radial äußeren Rand (200) mit einer im Wesentlichen achsparallelen Fläche aufweist, die an eine Auslassöffnung (203) im Lagerschild (13.2) angrenzt.

## Claims

1. Electric generator comprising a stator (16) and a rotor, wherein the stator (16) comprises a stator winding (18) electrically connected to a rectifier (105),
wherein the rectifier (105) comprises plus and minus diodes (88, 58) connected by means of a bridge circuit,
wherein the plus diodes (88) are connected to a plus heat sink (53) and the minus diodes (58) are connected to a minus heat sink (106),
wherein the rectifier is covered by a protective cap (47) comprising cooling air openings,
wherein the protective cap (47) has at least one opening (103) disposed axially over the minus diode (58) and the minus heat sink (106),
wherein between the protective cap (47) and the minus heat sink (106), behind an intermediate space (118), initially a connection plate (56) is disposed for realizing the rectifier bridge circuit,
wherein the plus heat sink (53) follows behind a further intermediate space (121) and a third intermediate space (124) is between the final protective cap (47) and the plus heat sink (53),
**characterized in that**
the protective cap (47) has a lowered ring section (100) which is approximately at axial height of the plus heat sink (53), wherein for tolerance and manufacturing reasons there is a narrow intermediate space (127) between the plus heat sink (53) and the ring section (100), so that a cooling airflow (115) sucked through the openings (103) flows substantially between the connection plate (56) and the minus heat sink (106) and thereby effectively cools the minus diodes (58) because a preheating by cooling plus diodes (88) does not occur.

2. Electric generator according to claim 1, **characterized in that** the opening (103) in the protective cap (47) axially above the minus diode (58) extends at least in such a way that, in axial direction, at least one surface portion of a diode surface having a length over half a diameter of a minus diode (58) is uninterruptedly released or is covered by the opening (103), respectively.

3. Electric generator according to claim 1 or 2, **characterized in that** between the protective cap (47) and the minus heat sink (106) a hollow space (109) is disposed, wherein the opening (103) in the protective cap (47) is disposed axially above the minus diode (58), a diode connecting wire (94) of the minus diode (94) and a radial inner edge (112) of the minus heat sink (106) are disposed in a plane (113).

4. Electric generator according to claim 3, **characterized in that** one of the plus diodes (88) closest to the minus diode (58) is disposed offset in the circumferential direction.

5. Electric generator according to any one of the preceding claims, **characterized in that** the plus heat sink (53) is disposed in the bearing shield (13.2) axially above one of a plurality of air inlet openings (97).

6. Electric generator according to claim 5, **characterized in that** the air inlet openings (97) are separated by webs (128), which are tilted with respect to the axis of the electric machine and are disposed radially inwardly with respect to a claw pole plate (23).

7. Electric generator according to any one of the preceding claims, **characterized in that** the plus heat sink (53) comprises cooling air openings (136) around a plus diode (88).

8. Electric generator according to any one of the preceding claims, **characterized in that** the connection plate (56) comprises an opening (91) through which cooling air flows, wherein the opening (91) is smaller than the outermost distance of two diagonally opposite cooling air openings (136) disposed directly around the plus diode.

9. Electric generator according to any one of the preceding claims, **characterized in that** a distance between the connection plate (56) and the plus heat sink (53) is smaller than the distance between the minus heat sink (106) and the connection plate (56).

10. Electric generator according to any one of the preceding claims, **characterized in that** an opening (82) in the protective cap (47) axially opposite the plus diode (88) has a larger axial distance with respect to the minus heat sink (106) than the opening (103) in the protective cap (47) axially above the minus diode (88).

11. Electric generator according to any one of the preceding claims, **characterized in that** the minus heat sink (106) and the plus heat sink (53) are overlapped in the region of the external circumference of the plus heat sink (53), wherein a radially externally located edge of an air inlet opening (97) of the minus heat sink (106) is axially opposite the plus heat sink (53).

12. Electric generator according to any one of the preceding claims, **characterized in that** the protective cap (47) comprises an externally substantially cylindrical outer edge (70), wherein between the outer edge (70) and the minus heat sink (106) an axial distance (104) is present.

13. Electric generator according to any one of the preceding claims, **characterized in that** the minus heat sink (106) is the bearing shield (13.2).

14. Electric generator according to claim 13, **characterized in that** the minus heat sink (106) comprises a radially outer edge (200) having a substantially axial parallel surface, which is adjacent to an outlet opening (203) in the bearing shield (13.2).

## Revendications

1. Générateur électrique, ayant un stator (16) et un rotor, dans lequel le stator (16) comporte un enroulement de stator (18) qui est électriquement relié à un redresseur (105),
dans lequel le redresseur (105) comporte des diodes positives et négatives (88, 58) reliées au moyen d'un montage en pont,
dans lequel les diodes positives (88) sont reliées à un dissipateur thermique positif (53) et les diodes négatives (58) sont reliées à un dissipateur thermique négatif (106), dans lequel le redresseur est recouvert d'un couvercle de protection (47) comportant des ouvertures d'air de refroidissement,
dans lequel le couvercle de protection (47) comporte au moins une ouverture (103) qui est agencée axialement au-dessus de la diode négative (58) et du dissipateur thermique négatif (106),
dans lequel une plaque de jonction (56) est préalablement agencée entre le couvercle de protection (47) et le dissipateur thermique négatif (106) après un espace (118) pour réaliser le montage en pont du redresseur,
dans lequel le dissipateur thermique positif (53) suit un deuxième espace (121) et un troisième espace (124) est situé entre le couvercle de protection terminal (47) et le dissipateur thermique positif (53),
**caractérisé en ce que**
le couvercle de protection (47) comporte une zone annulaire réduite (100) qui se situe approximativement à la hauteur axiale du dissipateur thermique positif (53), dans lequel, pour des raisons de tolérance et de fabrication, un petit espace (127) se situe entre le dissipateur thermique positif (53) et la zone annulaire (100), de sorte qu'un écoulement d'air de refroidissement (115) aspiré à travers les ouvertures (103) s'écoule sensiblement entre la plaque de jonction (56) et le dissipateur thermique négatif (106) et refroidit ainsi efficacement les diodes négatives (58) car aucun préchauffage n'est effectué par refroidissement de diodes positives (88).

2. Générateur électrique selon la revendication 1, **caractérisé en ce que** l'ouverture (103) dans le couvercle de protection (47) s'étend au moins axialement au-dessus de la diode négative (58), de sorte que dans une direction axiale, au moins une partie de surface d'une surface de diode avec une longueur supérieure à un demi-diamètre d'une diode négative (58) est exposée sans interruption ou est recouverte par l'ouverture (103).

3. Générateur électrique selon la revendication 1 ou 2, **caractérisé en ce qu'**une cavité (109) est agencée entre le couvercle de protection (47) et le dissipateur thermique négatif (106), dans lequel l'ouverture (103) dans le couvercle de protection (47) agencée axialement au-dessus de la diode négative (58), un fil de jonction de diode (94) de la diode négative (94) et un bord intérieur radial (112) du dissipateur thermique négatif (106) sont agencés dans un plan (113).

4. Générateur électrique selon la revendication 3, **caractérisé en ce qu'**une diode positive (88) qui est la plus proche de la diode négative (58) est agencée de manière décalée dans une direction circonférentielle.

5. Générateur électrique selon l'une des revendications précédentes, **caractérisé en ce que** le dissipateur thermique positif (53) est agencé axialement au-dessus de l'une des ouvertures d'entrée d'air (97) dans le flasque (13.2).

6. Générateur électrique selon la revendication 5, **caractérisé en ce que** les ouvertures d'entrée d'air (97) sont séparées par des nervures (128), dans lequel celles-ci sont agencées en oblique par rapport à l'axe de la machine électrique et radialement vers l'intérieur par rapport à une platine de pôles à griffes (23).

7. Générateur électrique selon l'une des revendications précédentes, **caractérisé en ce que** le dissipateur thermique positif (53) comporte des ouvertures d'air de refroidissement (136) tout autour d'une diode positive (88).

8. Générateur électrique selon l'une des revendications précédentes, **caractérisé en ce que** la plaque de jonction (56) comporte une ouverture (91) à travers laquelle l'air de refroidissement peut s'écouler, dans lequel l'ouverture (91) est plus petite que la distance extrême de deux ouvertures d'air de refroidissement (136) agencées directement autour de la diode positive et diagonalement opposées.

9. Générateur électrique selon l'une des revendications précédentes, **caractérisé en ce qu'**une distance entre la plaque de jonction (56) et le dissipateur thermique positif (53) est plus petite que la distance entre le dissipateur thermique négatif (106) et la plaque de jonction (56).

10. Générateur électrique selon l'une des revendications précédentes, **caractérisé en ce qu'**une ouverture (82) dans le couvercle de protection (47) agencée axialement par rapport à la diode positive (88) a une distance axiale par rapport au dissipateur thermique négatif (106) plus grande que l'ouverture (103) dans le couvercle de protection (47) agencée axialement au-dessus de la diode négative (88).

11. Générateur électrique selon l'une des revendications précédentes, **caractérisé en ce que** le dissipateur thermique négatif (106) et le dissipateur thermique positif (53) se chevauchent dans la zone de la circonférence extérieure du dissipateur thermique positif (53), dans lequel un bord situé radialement à l'extérieur d'une ouverture d'entrée d'air (97) du dissipateur thermique négatif (106) se situe axialement à l'opposé du dissipateur thermique positif (53).

12. Générateur électrique selon l'une des revendications précédentes, **caractérisé en ce que** le couvercle de protection (47) comporte un bord extérieur sensiblement cylindrique (70), dans lequel il existe une distance axiale (104) entre le bord extérieur (70) et le dissipateur thermique négatif (106).

13. Générateur électrique selon l'une des revendications précédentes, **caractérisé en ce que** le dissipateur thermique négatif (106) est le flasque (13.2).

14. Générateur électrique selon la revendication 13, **caractérisé en ce que** le dissipateur thermique négatif (106) comporte un bord extérieur radial (200) avec une surface sensiblement parallèle à l'axe qui est adjacente à une ouverture de sortie (203) dans le flasque (13.2).
